# EUROPEAN PATENT APPLICATION

(11) **EP 4 722 832 A1**
(43) Date of publication of application: **08.04.2026**
(21) Application number: 24315458.0
(22) Date of filing: 04.10.2024
(51) Int. Cl.: G05B 19/418

(54) **SYSTEMS AND COMPUTER IMPLEMENTED METHOD FOR DETERMINING UPDATED VALUES OF MANUFACTURING PARAMETERS TO REDUCE DEFECTS IN MANUFACTURED ITEMS**

(71) Applicant: ESSILOR INTERNATIONAL, 94220 Charenton-Le-Pont (FR)
(72) Inventor: SILEO, Cédric, 78830 Bullion (FR); BOLTEAU, Guillaume, 94210 La Varenne Saint Hilaire (FR); HADJ-ALI, Sara, 91550 Paray Vieille Post (FR); SAIDENE, Karina, 93300 Aubervilliers (FR); CUZON, Nicolas, 78350 Les Loges en Josas (FR)
(74) Representative: Korakis-Ménager, Sophie

(57) **Abstract**

System and computer implemented method for determining updated values of manufacturing parameters to reduce defects in manufactured items. The system is configured for receiving descriptions of the defects, the descriptions being provided in a natural language, converting the descriptions into inputs suitable for a deterministic problem-solving module and feeding the inputs in the deterministic problem-solving module to obtain the updated values of the manufacturing parameters.

## Description

### Technical field

This disclosure relates to systems and computer implemented methods for determining updated values of manufacturing parameters to reduce defects in manufactured items.

### Background information and prior art

During the manufacturing of items, for example ophthalmic lenses, not adapted values of manufacturing parameters may lead to defects.

To update the values of the manufacturing parameters one may use a deterministic problem-solving module, for example an expert system, to reduce the defects in future manufactured items.

However, using expert systems may be complex and may require a training of the users of these expert systems, furthermore the training is generally dedicated to a specific expert system and the users need to be retrained in cause of modifications of the expert system.

There is a need for systems and computer implemented methods for determining updated values of manufacturing parameters, to reduce defects in manufactured items, that are easier to use by the users.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a system for determining updated values of manufacturing parameters to reduce defects in manufactured items. The system is configured for receiving descriptions of the defects, the descriptions being provided in a natural language, converting the descriptions into inputs suitable for a deterministic problem-solving module and feeding the inputs in the deterministic problem-solving module to obtain the updated values of the manufacturing parameters.

**The** system of this divulgation has the advantages of ensuring that the user sees only the relevant information needed to understand the process or provide inputs. It filters out technical details that are only necessary for the deterministic problem-solving module. The system also ensures that the deterministic problem-solving module receives only the data it needs for rule-based processing, without any unnecessary explanations or texts from the user.

Another aspect of this disclosure is a computer implemented method for determining updated values of manufacturing parameters to reduce defects in manufactured items. The method comprises receiving descriptions of the defects, the descriptions being provided in a natural language, converting the descriptions into inputs suitable for a deterministic problem-solving method and feeding the inputs in the deterministic problem-solving method to obtain the updated values of the manufacturing parameters.

Another aspect of this disclosure is a computer program comprising instructions which, when the computer program is executed by a computer, cause the computer to carry out a method for determining updated values of manufacturing parameters to reduce defects in manufactured items. The method comprises receiving descriptions of the defects, the descriptions being provided in a natural language, converting the descriptions into inputs suitable for a deterministic problem-solving method and feeding the inputs in the deterministic problem-solving method to obtain the updated values of the manufacturing parameters.

**A** computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for determining updated values of manufacturing parameters to reduce defects in manufactured items. The method comprises receiving descriptions of the defects, the descriptions being provided in a natural language, converting the descriptions into inputs suitable for a deterministic problem-solving method and feeding the inputs in the deterministic problem-solving method to obtain the updated values of the manufacturing parameters.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a system for determining updated values of manufacturing parameters to reduce defects in manufactured items.
Figure 2 represents a method for determining updated values of manufacturing parameters to reduce defects in manufactured items.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the system for determining updated values of manufacturing parameters to reduce defects in manufactured items

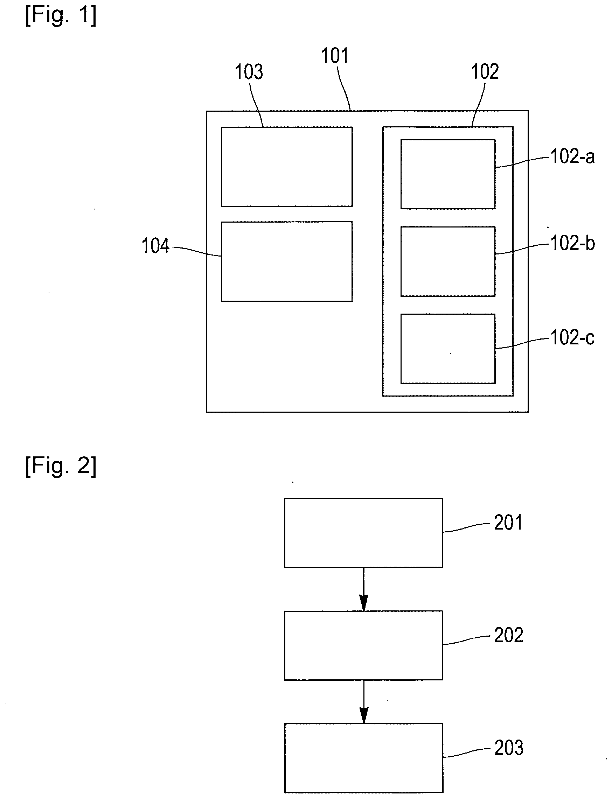

Figure 1 represents a system 101 configured for for determining updated values of manufacturing parameters of manufactured items, to reduce defects in the manufactured items.

The users of the system may be operators of the system.

The manufactured items may be ophthalmic lenses.

The defects in the ophthalmic lenses may be for example:

Defects relating to the positioning of the cylinder axis of the lenses. These defects arise from incorrect compensation for the misalignment between the lens and the blocker during the digital surfacing process. This misalignment may be for example between the center of the lens and the center of the blocker.

Other defects are the presence of pits or other surface irregularities, such as scratches on the lenses. Typically, these pits or irregularities can be detected using an arc lamp. Pits are caused by mechanical problems such as not perfect holding of the lens by the blocker. The pits may also be caused by worn tools for example worn polishing pads.

The system 101 comprises a calculation module 102 and an input-output module 103. The input-output module 103 is configured to obtain descriptions or instructions from the user and to provide the user with instructions and the updated values of the manufacturing parameters. The input-output module 103 may comprise a screen and a keyboard, a mouse or a touch pad: The input-output module 103 may also comprise a microphone and a speaker.

The calculation module 102 may be configured for determining updated values of manufacturing parameters to reduce defects in manufactured items.

The calculation module 102 may comprise a natural language sub-module 102-a, dedicated to interacting with the user in natural language, a deterministic problem-solving sub-module 102-b, dedicated to determining in a deterministic way the updated values of the manufacturing parameters. The determination is realized by applying a deterministic problem-solving method.

By deterministic methods, one means methods in which outcomes are precisely determined by pre-existing conditions or inputs, without any randomness or unpredictability. In such methods, given the same initial conditions, the same results will always occur. Deterministic methods follow a defined set of rules or algorithms that lead to a specific, predictable output.

The calculation module 102 may also comprise a control sub-module 102-c dedicated to interfacing between the natural language sub-module 102-a and the deterministic problem-solving sub-module 102-b.

The calculation module 102 comprises at least one memory and at least one processor.

In embodiments, the at least one memory and the at least one processor may be share among the different sub-modules. In this case each sub-module will have a different executable code, running independently of each other but sharing with the others the at least one memory and the at least one processor.

In other embodiments, each of the different sub-modules use a dedicated memory and processor and therefore each executable code of the sub-modules is executed on the dedicated memory and processor.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, logic gates, discrete hardware circuits, and other suitable hardware configured to perform the various functionality described throughout this disclosure.

The memory is computer-readable media. By way of example, and not limitation, such computer-readable media may include a random-access memory (RAM), a read-only memory (ROM), an electrically erasable programmable ROM (EEPROM), -optical disk storage, magnetic disk storage, other magnetic storage devices, combinations of the aforementioned types of computer-readable media, or any other medium that may be used to store computer executable code in the form of instructions or data structures that may be accessed by the processor of the calculation module 102.

**The** calculation module 102 may be an electronic device, for example a computer, a smartphone or a tablet computer, in this case the screen, the keyboard, the mouse, the touch pad, the microphone and/or the speaker of the input-output module 103 may be the ones of the computer, the smartphone or the tablet computer.

The calculation module 102 may be a virtual machine located on a cloud network or a server not co-located with the user. In this case the calculation module 102 may be accessed via a further device for example an electronic device, for example a computer, a smartphone or a tablet computer.

In embodiments the system 101 may comprise a plurality of calculation modules 102. Each calculation module 102 has a memory and a processor. The calculation modules 102 may be configured for jointly determining the updated values of the manufacturing parameters to reduce defects in manufactured items.

The system 101 may be also comprise a manufacturing device 104 or a set of manufacturing devices. The updated values of the manufacturing parameters may be dedicated to being used by the manufacturing device 104 or the set of manufacturing devices. The manufacturing device 104 or the set of manufacturing devices may be configured to manufacture the manufacture items. To realize the manufacturing of the items the manufacturing device 104 or the set of manufacturing devices may use the updated values of manufacturing parameters. A module not presented in figure 1, may transmit the updated values of manufacturing parameters from the calculation module 102 to the manufacturing device 104 or the set of manufacturing devices.

### Description of the method for determining updated values of manufacturing parameters to reduce defects in manufactured items

To realize the determination of the updated values of manufacturing parameters to reduce defects in manufactured items, the memory of the calculation module 102 may store a computer program comprising instructions which, when the program is executed by the processor, cause the calculation module 102 to carry out a method, for example a computer implemented method, for determining updated values of manufacturing parameters to reduce defects in manufactured items.

The method, as presented in figure 2, comprises:
- a step 201 of receiving descriptions of the defects, the descriptions being provided in a natural language,
- a step 202 of converting the descriptions into inputs suitable for a deterministic problem-solving method and
- a step 203 of feeding the inputs in the deterministic problem-solving method to obtain the updated values of the manufacturing parameters.

The steps 201, 202 may be realized by the natural language sub-module 102-a.

The step 203 may be realized by the control sub-module 102-c.

The deterministic problem-solving method may be implemented in the deterministic problem-solving sub-module 102-b.

Generally, the defects are the one of an initial set of manufactured items. The initial set of manufactured items may be realized using the manufacturing device 104 or the set of manufacturing devices. Once the updated values of the manufacturing parameters are obtained, they are used to manufacture a new set of manufacturing devices. The new set of manufacturing devices may be manufactured using the manufacturing device 104 or the set of manufacturing devices. Generally, the defects of the new set of manufacturing devices are reduce compared to the ones of the initial set of manufacturing devices.

The descriptions may be written descriptions or oral descriptions. When using written descriptions, the input-output module 103 may advantageously comprise the keyboard and the screen. When using oral descriptions, the input-output module 103 may advantageously comprise the microphone and the speaker.

The method may also comprise a step of type-checking the inputs prior to feeding the inputs in the deterministic problem-solving module. By type-checking one means verifying that the inputs provided in the step of converting 202 are of a type expected by the deterministic problem-solving method. The type-checking may be realized by the control sub-module 102-c.

The deterministic problem-solving method may be an expert system.

By expert system, one means a computer implemented method emulating the decision-making ability of a human expert. Expert systems are designed to solve complex problems by reasoning through bodies of knowledge, represented mainly as if-then rules.

The deterministic problem-solving module may be implemented as an artificial intelligence agent.

The system 101 may implement, in the natural language sub-module 102-a, an LLM, the LLM may be configured for converting the descriptions into the inputs.

LLM means Large Language Model. Large Language Models are computational models capable of language generation or other natural language processing tasks. As language models, LLMs may acquire these abilities by learning statistical relationships from vast amounts of text during a self-supervised and semi-supervised training process.

The LLM may be provided with a context representing a way of working of the deterministic problem-solving method.

Example of the context is the following:
*You are connected to an expert system specialized in determining updated values of production parameters to reduce defects in optical lenses. This expert system follows a sequential set of rules, where each answer provided will lead to the next rule in the detection of defects. Your task is to engage with this expert system, providing answers to each rule-based question and proceeding through the system to identify potential defects in the lenses.*
*For each step:*
   - *Receive the current rule or diagnostic question from the expert system.*
   - *Provide a clear and accurate answer based on the information available (e.g., lens measurements, defect observations, surface scans).*
   - *Use the answer to progress to the next rule in the system.*
   - *Continue this process until the system concludes with the updated values of the manufacturing parameters.*
   - *Summarize the outcome and suggest any required actions based on the final rule evaluation.*

The LLM may be previously trained with the context.

The LLM may be a generic LLM previously fine-tuned with the context.

The LLM may be configured for using at least one file comprising the context.

The LLM may be instantiated with the context. By instantiated one also means prompted.

The LLM and the expert system may be linked together by a control method. The control method may be implemented in the control sub-module 102-c. The control method may be a software, for example written in Python.

The control method serves as an intermediary, controlling the flow of information between the LLM, the expert system, and the user. Its primary function is to intercept and analyze the text generated by the LLM to determine whether it should be displayed to the user or sent to the expert system for further processing. It ensures seamless interaction, with the user receiving meaningful output and the expert system receiving the necessary data to process rules.

The control method captures all text generated by the LLM. It determines whether the text is meant for the user or for the expert system by analyzing the content. The user-directed text is intended to explain or display results directly to the user. This can include summaries, explanations of defects, or requests for additional user input or the updated values of the manufacturing parameters. The expert system-directed text is data that needs to be processed by the expert system, such as answers to specific rules, diagnostic requests, or input parameters that need further analysis by the system.

The control method may use several techniques to differentiate between text intended for the user and text meant for the expert system:
- Rule-Based Classification: The control method may follow a predefined set of rules to identify the type of content. For instance, if the text contains technical parameters, answers to specific rules, or structured data (e.g., measurements, defect identifiers), it is classified as expert system-directed text. If the text includes explanations, summaries, or requests for additional information, it is identified as user-directed text.
- Keyword Detection: The control method may also use keyword detection to determine intent. Phrases like "defect summary," "lens analysis results," or "request additional input" are flagged as user-directed text, while terms like "input parameters," "rule response," or "diagnostic data" signal that the text should be sent to the expert system.
- LLM-Generated Tags: The LLM may include specific tags or markers within its output to indicate whether the text is for the expert system or for the user. For example, the LLM could generate content like:
   *{"recipient": "user", "message": "The lens has several surface defects. Please review the following results."}*
   *{"recipient": "expert_system", "rule_input": "Surface curvature is within acceptable range.''}* The control method parses these tags and directs the message accordingly.
- The control method may employ basic Natural Language Processing (NLP) techniques to understand the tone, structure, and intent of the message. For example, if the message is descriptive and informative, it is likely user-directed. If it is highly structured or rule-based, it is more likely meant for the expert system.
- The control method may maintain context about the current interaction. If the LLM is responding to a question that originated from the user, the control method may assume the response is user-directed. If it is in the middle of processing expert system rules, it may assume the response is meant for the expert system unless explicitly stated otherwise.

When the control method identifies that the text is intended for the user, it may pass the text to the input-output sub-module 102-a. The input-output module 102-a may then display the text on the screen or broadcast the text using the speaker. The text may include detailed summaries of defects found, explanations of what the expert system is processing, updated values of the manufacturing parameters or questions requesting further input from the user. The control method may ensure that user-friendly formatting is applied to enhance readability.

When the control method identifies that the text is meant for the expert system (e.g., rule answers, parameters for defect analysis), it converts the text into inputs having the appropriate format and interacts with the expert system to submit the inputs. The inputs may include specific answers to diagnostic rules or input parameters required for progressing through the rule-based logic.

The control method may realize the type-checking of the inputs destinated to the expert system and, if necessary, formats the inputs before forwarding them to the expert system, ensuring that the right inputs are passed in a structured and adapted manner to the expert system.

To interact with the expert system, the control method may use one of the following solutions:
- If the expert system provides an API, the control method may interact with it using HTTP methods (GET, POST, PUT, etc.). The control method will send structured requests (typically in formats like JSON or XML) to the expert system, passing the required data (e.g., lens parameters, rule answers). In return, the expert system will send a structured response, which the control method processes and routes back to the LLM or user.
- in some cases, the expert system might store its rules and data in a database that can be directly accessed by the control method. The control method would then query the database to retrieve or update rule-based data. This would require the control method o have the appropriate database drivers and credentials.
- If the expert system communicates via a message queue (like RabbitMQ, Kafka), the control method may send and receive messages via this protocol. Message queues are often used in highly decoupled, distributed systems where real-time processing is needed.
- If the expert system exposes their functions via an RPC framework (e.g., gRPC, Thrift). The control method may then invoke specific methods exposed by the expert system over a network connection.
- In some older or more isolated expert systems, interaction may be facilitated through file exchanges. The control method could write specific input data to a file that the expert system reads, and the expert system could return results in a file that the control method later processes. This may be useful in legacy environments.

After the expert system processes the input, the response of the expert system is sent back to the LLM by the control method.

The control method may send a new prompt comprising only the outputs of the expert system. The prompt may also comprise additional context to guide the LLM on how to interpret the data. In other words, in this approach, each time the LLM receives new information, it is provided with a fresh prompt, explicitly asking it to analyze or act based on that input. For example, if the expert system returns *"Lens curvature is out of specification,"* the control method sends a new prompt to the LLM like *"The expert system has returned the following result: 'Lens curvature is out of specification.' Please analyze this and explain the implications of this defect for lens performance.".* This approach is more suitable when the interaction is straightforward and doesn't require the LLM to remember previous interactions or prompts, making it ideal for stateless or independent analyses.

The control method may send the previous prompt plus the outputs of the expert system. In other words, in this approach, the control method resends the previous prompt along with the new expert system output to maintain context. This method builds a "chain of context" where the LLM receives both the earlier data and the most recent information. This helps the LLM maintain continuity in understanding the task. On each iteration of the use of the expert system one adds more information to the context sent to the LLM. This approach is useful when the task involves maintaining a conversation or continuous flow of logic where previous information is critical for further interpretation.

The control method may also adapt a hybrid approach and sends only the critical parts of the previous context along with the new data. This ensures that only the relevant information is carried forward, avoiding unnecessary repetition while still providing sufficient context.

**The** LLM may generate additional queries or clarifications based on the response of the expert system, which the control method will intercept and either forward to the user or back to the expert system as required.

**The** use of the control method will streamline the workflow by automatically directing the LLM's output to the correct recipient (user or expert system), the control method ensures efficient, real-time communication between all parties.

The control method enhances user experience by ensuring that the user only receives relevant information that is easy to understand, without being burdened by the complex communication happening with the expert system.

A typical workflow of the interaction between the LLM and the expert system may be the following:
- The LLM generates text, based on input from the user or data from the expert system.
- The control method captures the generated text and determines if it is meant for the expert system or for the user by using rule-based classification, keyword detection, tags, or NLP parsing.
- The control method routes the text to appropriate destination:
   ∘ for the user: If the text is for the user (e.g., status updates, defect summaries, or user queries), the module formats and displays the text in a readable format for the user interface.
   ∘ for the expert system: If the text is for the expert system (e.g., input to a rule, diagnostic request), the module formats it appropriately (e.g., into an API call) and sends it to the expert system for processing.
- The expert system processes the request and sends a response back to the control method. Possibly the same may be realized by the user.
- The control method routes the expert system's response (or user's response) back to the LLM for further interpretation or directly to the user if the process is complete.

### Description of a use case of the system for determining updated values of manufacturing parameters to reduce defects in manufactured items

In a use case of the system 101, the user faces a lot of rejected lenses due to bad cylinder axis, but the user doesn't know how to update the values of the manufacturing parameters to reduce these defects. To find it, the user may ask to the system 101 for help for example by using the following request:
*"We have a lot of rejected lenses due to bad cylinder axis. Could you help?"*

The request is received by the natural language sub-module 102-a. The LLM, implemented in the natural language sub-module 102-a, determines the best way to reply.

The LLM determines that it needs to use the expert system. The LLM prepares a query to the expert system, implemented in the deterministic problem-solving sub-module 102-b. The query is then intercepted by the control sub-module 102-c potentially adapted, and transmitted by the control sub-module 102-c to the expert system of the deterministic problem-solving sub-module 102-b.

The expert system may request further information. This request is transmitted to the LLM via the control sub-module 102-c and the request is potentially adapted by the control sub-module 102-c. The LLM interacts with the user to obtain the further information. Here, it needs to know if one has a Rz drift, so it shows what question the LLM needs to ask in order to continue: "Ask human if we have a Rz drift? (y/n)". LLM knows now that it needs to ask the user if the Rz is high or not, and it asks to the user "Do we have a high Rz?". The user may respond "Of course".

The LLM interprets this response as a positive response and sends, via the control sub-module 102-c, this positive response to the expert system. According to the rules of the expert system, in this case, if we have a high Rz, one must check the back of the rejected lenses to see if they are all engraved. The expert system sends, via the control sub-module 102-c, the request the LLM, who sends it to user, by asking the following question: "Do you know if all the rejected lenses are engraved on the front face?" In our case, one may answer "most of them".

The LLM may interprets "most of them" as a "yes" and continues its dialogue, as previously via the control sub-module 102-c, with the expert system by giving him the input "yes". The expert system continues to follow the rule that now tells LLM to ask user if the rejected lenses are also all engraved on the front face. On receiving this observation, the LLM knows that it must ask user "Can you tell if the rejected lenses are all engraved on front face?". And the user may we reply with "I think so".

Once again, LLM understands that this is a 'yes' and passes it on to the expert system via the control sub-module 102-c. According to the rules, the expert system determines the updated values of the manufacturing parameters "The final answer is: updated_values parameter_Rz". The LLM understand that this is the final answer and can give it directly to the user: "Final answer: please set the parameter_Rz to updated_values".

## Claims

1. A system (101) for determining updated values of manufacturing parameters to reduce defects in manufactured items,
the system (101) being configured for:
- receiving descriptions of the defects, the descriptions being provided in a natural language,
- converting the descriptions into inputs suitable for a deterministic problem-solving module and
- feeding the inputs in the deterministic problem-solving module (102-b) to obtain the updated values of the manufacturing parameters.

2. The system (101) according to the claim 1,
the descriptions being written descriptions or oral descriptions.

3. The system (101) according to the claim 1 or 2,
the system (101) being configured for type-checking the inputs prior to feeding the inputs in the deterministic problem-solving module (102-b).

4. The system (101) according to anyone of the claims 1 to 3,
the deterministic problem-solving module (102-b) being an expert system.

5. The system (101) according to anyone of the claims 1 to 4,
the deterministic problem-solving module (102-b) being implemented as an artificial intelligence agent.

6. The system (101) according to anyone of the claims 1 to 5,
the system comprising an LLM, the LLM being configured for converting the descriptions into the inputs.

7. The system (101) according to the claim 6,
the LLM being provided with a context representing a way of working of the deterministic problem-solving module.

8. The system (101) according to the claim 7,
the LLM being previously trained with the context.

9. The system (101) according to the claim 7,
the LLM being a generic LLM previously fine-tuned with the context.

10. The system (101) according to the claim 7,
the LLM being configured for using at least one file comprising the context.

11. the system (101) according to the claim 7,
the LLM being instantiated with the context.

12. Computer-implemented method for determining updated values of manufacturing parameters to reduce defects in manufactured items,
the method comprising:
- receiving (201) descriptions of the defects, the descriptions being provided in a natural language,
- converting (202) the descriptions into inputs suitable for a deterministic problem-solving method and
- feeding (203) the inputs in the deterministic problem-solving method to obtain the updated values of the manufacturing parameters.

13. The computer-implemented method according to the claim 12,
the descriptions being written descriptions or oral descriptions.

14. The computer-implemented method according to the claim 12 or 13,
the method also comprising type-checking the inputs before feeding the inputs in the deterministic problem-solving method.

15. The computer-implemented method according to anyone of the claims 12 to 14,
the deterministic problem-solving method being an expert system.
